# EUROPEAN PATENT SPECIFICATION

(11) **EP 3 365 567 B1**
(45) Date of publication and mention of the grant of the patent: **11.11.2020**
(21) Application number: 16810025.3
(22) Date of filing: 19.10.2016
(51) Int. Cl.: F16B 21/20

(54) **QUICK CONNECTION AND/OR FASTENING SYSTEM**
SCHNELLVERBINDUNGS- UND/ODER BEFESTIGUNGSSYSTEM
SYSTÈME DE RACCORDEMENT ET/OU DE SERRAGE RAPIDE

(30) Priority: 23.10.2015 IT UB20154879
(43) Date of publication of application: 29.08.2018
(73) Proprietor: Mypro Research S.r.l., 36016 Thiene (VI) (IT)
(72) Inventor: BRUN, Giancarlo, 36016 Thiene (VI) (IT)
(74) Representative: Ziliotto, Tiziano
(86) International application number: PCT/IB2016/056285
(87) International publication number: WO 2017/068510

(56) References cited:
- EP-A1- 0 639 482
- EP-A1- 0 639 482
- WO-A1-2009/059673
- WO-A1-2009/059673
- DE-U- 1 908 420
- DE-U- 1 908 420
- US-A- 4 113 399
- US-A- 4 113 399
- US-A1- 2014 223 717

## Description

The present invention concerns the field of quick connection and/or fastening systems suited to allow two elements to be alternatively fastened together and separated from each other.

In particular, the present invention concerns the technical field of quick connection and/or fastening systems suited to allow two elements to be alternatively fastened together and separated from each other, said two elements being for example the upright or bearing structure and a shelf of a shelving system, as well as a frame (for example of a piece of furniture) and a door leaf of the same piece of furniture.

The present invention, in particular, concerns a quick connection and/or fastening system suited to be used to fix a handle, for example, to door/window leaves, doors and/or windows, in particular both revolving and/or sliding doors and/or windows, and/or door leaves of pieces of home furniture or furniture in general, such as, for example, shelving systems, chests of drawers, wardrobes.

### DESCRIPTION OF THE STATE OF THE ART

Connection and/or coupling systems are known in the art, by means of which two components are fixed to each other. For example, in the case of the installation of shelving systems and/or similar structures, systems are known which allow the shelves to be fixed to the bearing structure of the shelving system (or even to a wall, in the case of single shelves or similar accessories) and also allow a shelf to be removed from the shelving system itself. The most common systems comprise small metal parts, for example screws and dowels, as well as elements having predefined shape and size and suited to be fixed to the bearing structure and to the various shelves by means of said screws and/or said dowels. For example, the assembly of a shelving system by means of a connection and/or fastening system of this type thus requires the previous arrangement on the shelving system of those coupling or fastening elements which during the real assembly procedure will be coupled with those coupling and/or fastening elements previously fixed to the shelves.

If on the one hand it is possible to appreciate the advantages offered by the most recent solutions, it should however be noticed that said solutions are not without drawbacks.

In particular, among the typical drawbacks it is important to mention the fact that the real anchorage elements in any case must be previously fixed to the elements to be fixed to each other (for example, to the bearing structure and to the various shelves of a shelving system) through screws or similar means, and therefore it is not possible to reduce the overall assembly time by more than a certain extent.

Furthermore, in the case of modern shelving systems there is the tendency to avoid the use of screws or similar means, due to the fact that they are unaesthetic and to the risk of the component parts of a shelving system being damaged (for example, scratches or similar damages).

Moreover, the coupling systems of the known type, in particular the real coupling means, do not offer the necessary guarantees and the necessary reliability against any accidental uncoupling or release, so that the risk arises that during use of the assembled structure, for example while a book is being taken from a shelf, the shelf itself may be accidentally separated from the bearing structure with severe risks for the user and the consequent loss of stability of the structure itself. Finally, disassembling the previously assembled parts essentially means facing the same problems met during assembly, such as the inevitable need to use tools suitable for this purpose and disassembly times that are often too long.

As an alternative to the more classical solutions just briefly described above, other solutions were proposed in the recent past with the aim to overcome or at least reduce their drawbacks. However, very often said solutions have been proposed giving priority, in some cases, to the need for functionality and reliability (to the detriment, however, of aesthetic needs), while in other cases priority has been given to the needs related to the appearance or size or those related to ease of assembly and installation, however often to the detriment of functionality or even of reliability.

Connection systems according to the prior art are known from EP 0 639 482 A1, WO 2009/059673 A1, US 4 113 399 A, DE 19 08 420 U and US2014/223717 A1.

It is thus an object of the present invention to overcome the drawbacks mentioned above and found in the solutions known in the state of the art.

In particular, the objects and goals of the present invention can be summed up as follows.

It is a first object of the present invention to provide a solution which is suited to be used for multiple applications, for example, but not exclusively, for the quick assembly of structures such as, for example, shelving systems and/or similar structures or even for fixing handles, for example to doors and/or windows, and which is characterized by ease of construction and use, is reliable and suited to be switched in different configurations through simple and immediate operations (and possibly by using few and simple tools).

It is then, in particular, a further object of the present invention to provide a quick connection and/or fastening system which, independently of each specific application, is capable of providing suitable guarantees in terms of reliability (by drastically eliminating or reducing the risk of accidental uncoupling of the parts mutually fastened together through the system itself), as well as in terms of functionality (by allowing the same parts to be uncoupled from each other through simple and immediate operations), in terms of simplicity of construction (by being made up of a limited number of simple and easy-to-produce component parts), as well as in terms of ease of assembly and/or application to the parts to be connected to each other.

Again, the system according to the present invention must allow the assembly of component parts, avoiding or at least minimizing, in particular, any undesired slack between the component parts and/or the incorrect fastening of the component parts themselves.

### DESCRIPTION OF THE PRESENT INVENTION

The present invention can be specifically and conveniently applied in the field of assembly of shelving systems, sheves and/or similar accessories, as well as for fixing handles, for example for doors and windows, and also for pieces of furniture, shelves, chests of drawers, etc. This is, therefore, the reason why the system according to the present invention will be described here below with particular reference to some of these applications.

It should however be noted that the system according to the present invention can be advantageously applied in all those cases in which it is necessary to mutually fix two components or parts to each other in a quick and reliable manner (avoiding any accidental uncoupling).

The present invention is based on the general concept according to which the disadvantages or drawbacks that are typical of the solutions known in the art can be overcome or at least minimized by providing a quick connection and/or fastening system which comprises a first female component and a second male component suited to be alternatively connected and disconnected (and also suited to be respectively fixed to a first and to a second element to be mutually connected and/or fastened), in which the mutual connection of said two female and male components takes place through the insertion of at least one portion of said second male component into said first female component, wherein the insertion of the male component in the female component causes the elastic switching of a third locking component, and wherein the elasticity of said locking component automatically causes the mutual engagement of the locking component and the male component, in such a way that any movement of said male component or said female component in the direction contrary to the direction of insertion of said male component into said female component results in an enhanced mutual engagement of said locking component and said male component.

In this way, the functionality of the device or system will be considerably simplified as, for example when fixing a shelf to a wall (previously provided with the male component and the female component including the locking component), the user will be simply required to push the shelf against the wall, in such a way as to introduce the male component into the female component according to the procedure summed up above.

Furthermore, also the reliability of the system will be considerably improved, as any accidental uncoupling of the male and female components is prevented thanks to the way in which the locking component and the female component are engaged with each other, since any minimal translation movement of the male component in the direction contrary to the direction of insertion results in the switching of the locking component contrary to the switching obtained from the insertion of the male component in the female component, and thus in the enhanced mutual engagement of said locking component and said male component.

Furthermore, the system will be characterized by a reduced number of components (even only two or three, depending on whether the locking component is part of the female component or not), each one of which is simple to produce and thus to assemble, and which have reduced production times and costs. The overall dimensions of the system will also be considerably reduced, with clear advantages also in terms of aesthetic appearance.

Moreover, further advantages will be obtained by equipping the system with means suited to deactivate the locking component (releasing it from the male component) in such a way as to be able to obtain the mutual uncoupling of said first and second component whenever and only when needed.

Based on the considerations summed up above, according to the present invention the subject of the same is a system according to the main claim 1, that is, a connection system, in particular for the assembly of component parts through mutual connection, said component parts being for example shelving systems, and/or for the assembly of shelves and/or similar applications, said system comprising a first male element and a second female element, said male and female elements being suited to be alternatively connected to and disconnected from each other, wherein for the mutual connection and disconnection of said male element and female element an end portion of said male element is inserted in and respectively extracted from a first housing seat defined by said female element, said system comprising a locking element suited to mutually lock said male and female elements, wherein said locking element comprises at least one tab with a free end portion suited to be switched through a rotating or bending movement which, in the configuration in which said male and female elements are disconnected from each other, at least partially extends inside said first housing seat, wherein said locking element is configured in such a way that it can be switched into a locked position in which said free end portion is engaged with said male element through the insertion of said male element in said housing seat created in said female element, and in such a way that any movement of said male element and/or said female element in the direction contrary to the direction of insertion of said end portion of said male element in said first seat created in said female element results in an enhanced mutual engagement of said free end portion of said locking element and said male element. The connection system furthermore comprises a release element suited to switch said free end of said locking element from said locked position to said released position, in which said free end of said locking element is not engaged with said male element, wherein said release element is suited to be rotated with respect to a predefined rotation axis, and in that through the rotation of said release element with respect to said predefined rotation axis, said free end portion is subjected to a thrusting action exerted by a portion of said release element that is eccentric with respect to said predefined rotation axis.

According to an embodiment of the present invention, said free end portion of said locking element comprises an external engagement edge and, in said engaged position, said external engagement edge comes into contact with a portion of the surface of said male element.

According to a further embodiment, said male element comprises a thrusting surface which, during the insertion of said male element in said corresponding seat created in said female element, thrusts said free end portion of said locking element, wherein in said locked position said free end of said locking element is released from said thrusting surface of said male element.

In the context of the present invention, said locking element can be suited to be switched from said locked position to a released position in which said free end portion of said locking element in not engaged with said male element, said end portion of said male element thus being able to be extracted from said seat created in said female element.

Always in the context of the present invention, said locking element can be suited to be released from said female element.

According to an embodiment of the present invention, said free end portion of said locking element can be switched from said locked position to said released position in which said free end portion of said locking element is not engaged with said male element through a thrusting action exerted on it along a direction that is substantially parallel to the direction of insertion of said male element in said housing seat created in said female element.

According to a further embodiment, said system may comprise also a release element suited to switch said free end of said locking element from said locked position to said released position, in which said free end of said locking element is not engaged with said male element, in particular said release element being suited to be switched between a first position and a second position, wherein, with said release element in said second position, said free end of said locking element is subjected to said thrusting action exerted by a portion of said release element and is released from said male element.

According to the present invention, said release element is suited to be rotated with respect to a predefined rotation axis, in particular perpendicular to the direction of insertion of said male element.

According to a further embodiment, said free end of said locking element comprises two half portions arranged according to directions that are not parallel according to a view perpendicular to said direction of insertion of said male element.

Further advantages will be guaranteed by the further embodiments of the system according to the present invention which are defined in the further dependent claims.

### BRIEF DESCRIPTION OF THE DRAWINGS

The present invention is illustrated here below through the description of some embodiments of the same represented in the attached drawings. It should however be noticed that the present invention is not limited to the embodiments illustrated in the drawings; on the contrary, all those variants and/or changes to the embodiments described and represented below that are clear and apparent to the expert in the art fall within the scope and object of the present invention.

In particular, in the attached drawings:
- Figures from 1 to 4 show, through perspective and sectional views, an example of a possible application of the system according to a first non-claimed example, as well as the steps of coupling and uncoupling the first and the second component of the system;
- Figure 5 shows perspective views of the components of the system according to an embodiment of the present invention in the mutual coupled or constrained and uncoupled or released configurations;
- Figure 6 shows perspective, side and plan views of the components of the system according to an embodiment of the present invention;

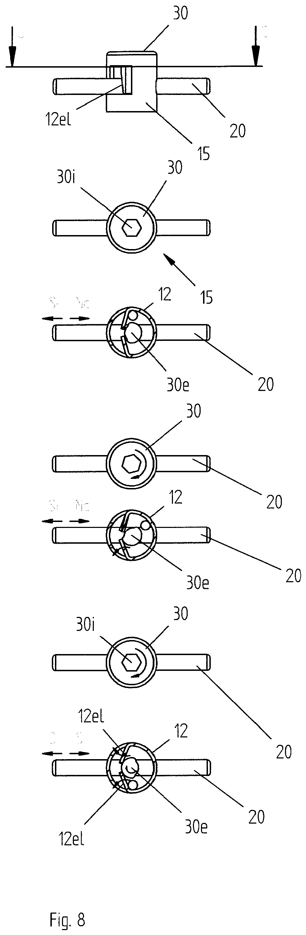

- Figures 7 and 8 show, through perspective, sectional, side and plan views, respectively the steps of mutual constraining and releasing of the components of the system according to an embodiment of the present invention;
- Figure 9 shows perspective and side views of the system according to an embodiment of the present invention;
- Figures from 10 to 12 show perspective, sectional and plan views of the components of the system according to a further embodiment as well as the steps of mutual coupling or constraining and uncoupling or releasing of the components;
- Figures from 13 to 16 show, through perspective views, further examples of possible applications of the system according to some embodiments ;
- Figures from 17 to 19 show, through perspective and sectional views, further examples of possible applications of the system according to some embodiments.

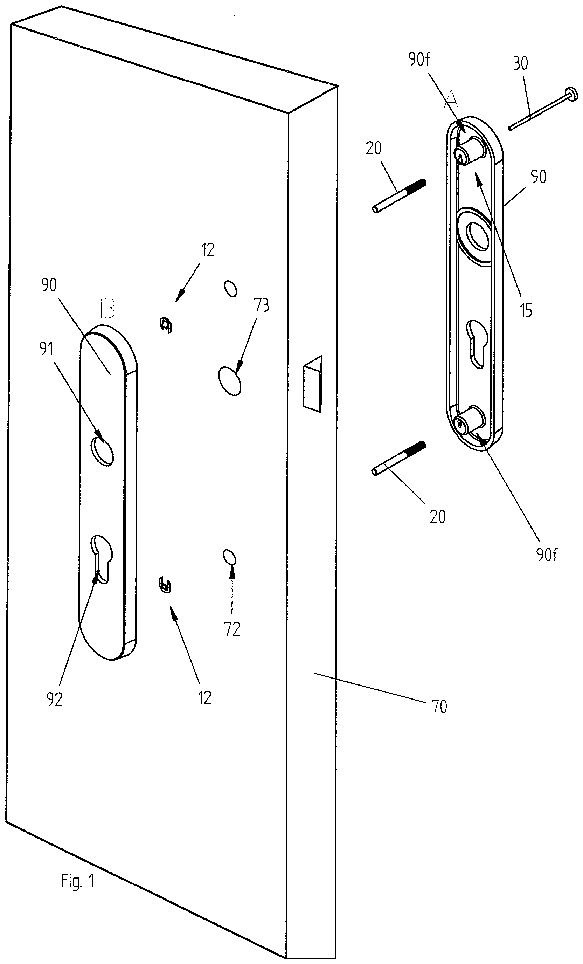

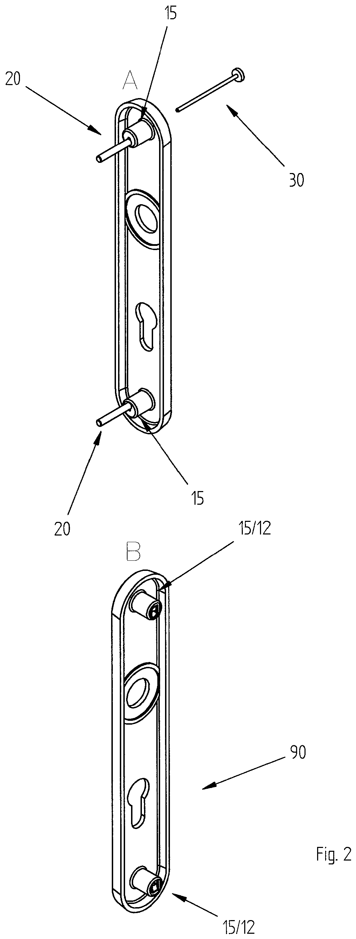

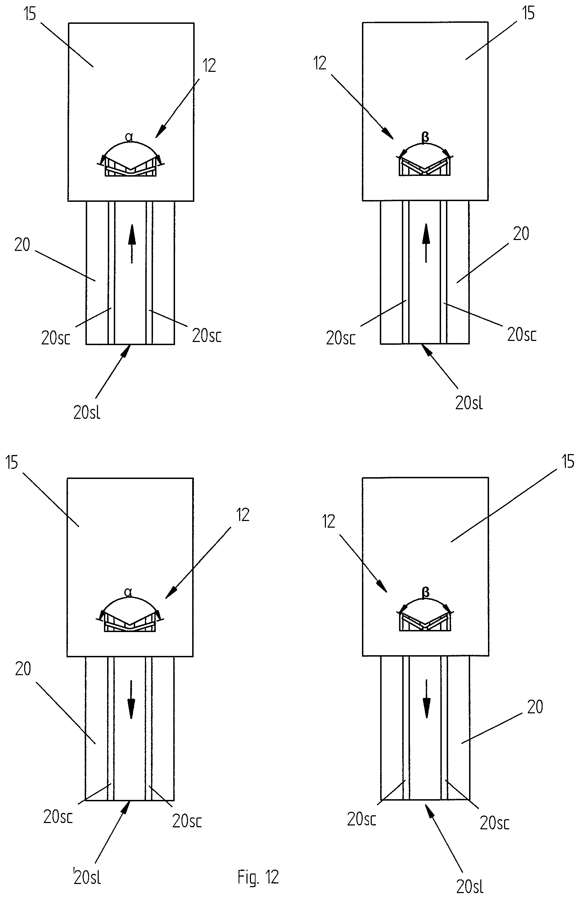

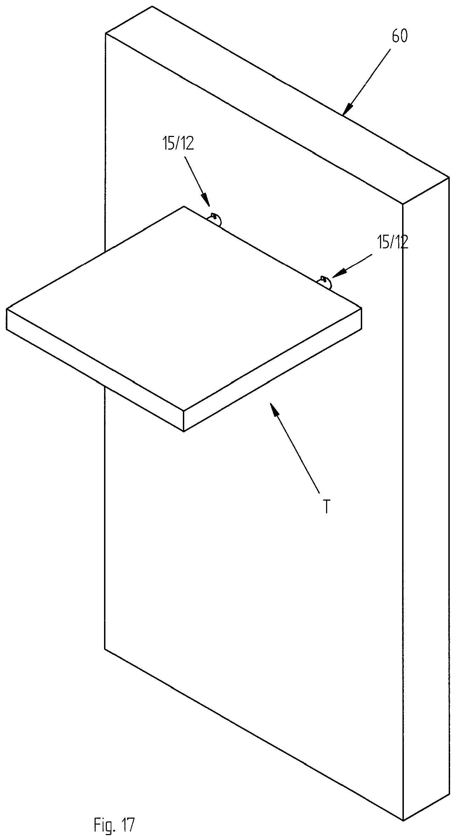

The examples shown in figures 2-4,11-13 and 15-20 do not fall under the scope of the claimed connection system.

### DETAILED DESCRIPTION OF SOME EMBODIMENTS OF THE PRESENT INVENTION

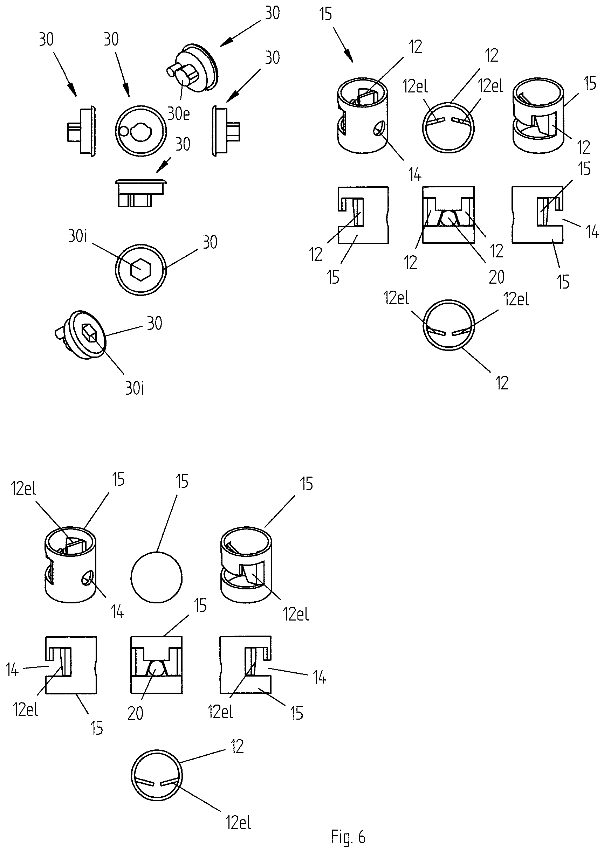

The system according to the embodiment of the present invention illustrated in Figures from 5 to 9 essentially comprises a first male element or component 20 (essentially, a simple cylindrical bar), a second female element or component 15, a locking element or component 12, and finally a release element or component 30. The female component is essentially constituted by a hollow cylindrical body (see Figure 6) provided with an internal seat 14 that communicates with the outside through at least one opening whose shape and size correspond to those of the male component 20. For the sake of explanation clarity, in relation to the male element 15 it is useful to identify a direction of longitudinal extension (parallel to the longitudinal axis of symmetry) and a direction of transverse extension of the housing seat 14. The locking element 12 comprises, too, a main cylindrical body (Figure 6) whose shape and size are such as to allow it to be housed inside the female component 15. The locking element 12 furthermore comprises two opposite elastic tabs that extend from the main cylindrical body towards the inside of the same along non-parallel directions and therefore in such a way as to enclose an angle that is smaller than 180°. The extension of the elastic tabs, in particular, is such that, since the component 12 is housed in the component 15 as shown in the figures, the elastic tabs extend at least partially inside the housing seat 14 created in the female component 15. According to alternative embodiments, the locking component 12 can be made in a single piece with the female element 15, wherein in order to ensure the functionality of the system it is sufficient, as explained above, for the tabs to extend at least partially inside the housing seat 14 (in such a way as to obstruct it at least partially in a transverse view, in particular through the insertion opening for the element 20 through which the seat 14 communicates with the outside).

The shape and size of the release element 30 (essentially a plug) correspond to and are compatible with those of the female component 15, so that the release element 30 is suited to be positioned at the level of an end portion of the female component 15, as shown in the figures.

Regarding the opposite elastic tabs of the locking element 12, each one of them comprises a free end portion 12el with a tapered edge facing towards the inside of the seat 14.

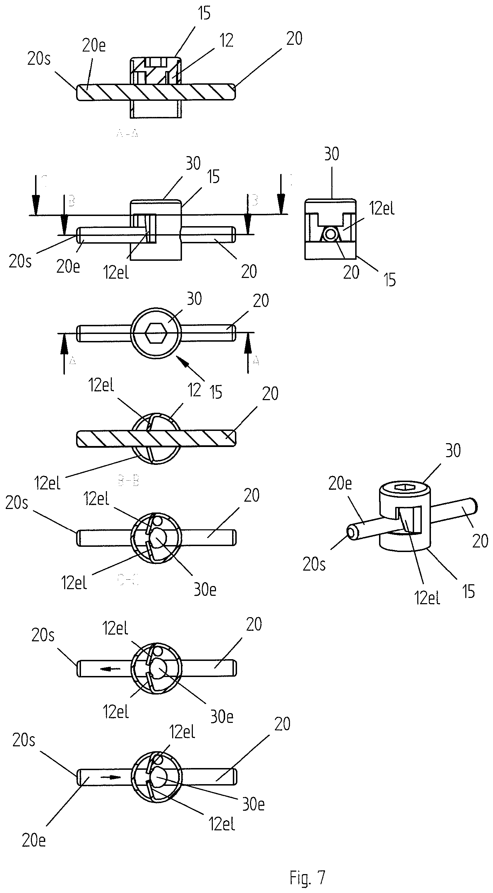

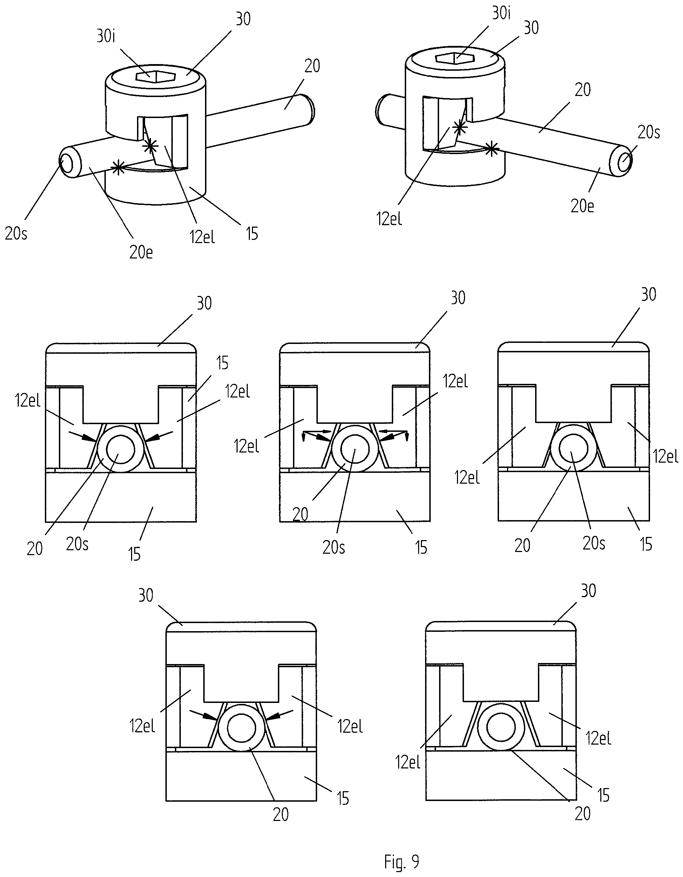

The procedures for mutually engaging or constraining the male element 20 and the female element 15 are schematically shown in Figures 7 and 9 and can be summed up as follows.

With the locking element 12 housed inside the female element 15 according to the procedures described above (meaning with at least the end portions 12el of the elastic tabs extending through the housing seat 14 of the female element 15 in such a way as to obstruct it at least partially or to be arranged along the insertion path of the element 20), the end portion 20e of the male element 20 is inserted in the housing seat 14 created in the female element 15 with a translation movement, in particular through the opening by means of which the seat 14 communicates with the outside.

Through the insertion of the end portion 20e of the male element 20 in the seat 14 through a translation movement, a thrusting surface 20s of the male element 20 first comes into contact with the end portions 12el of the elastic tabs of the locking element 12 (thanks, precisely, to the fact that the end portions 12el extend through the insertion seat 14 created in the female element 15 and are arranged along the insertion path of the male element 20). Proceeding then with the insertion of the male element 20 results in the elastic switching (essentially a bending movement) of the elastic tabs or at least of their end portions 12el, which will come to be arranged in such a way as to enclose an angle that is smaller than the angle they enclosed at the beginning (when they were not engaged with the male element 20). During the further insertion of the male element 20, first of all there will be a loss of contact between the thrusting surface 20s and the elastic tabs, wherein, furthermore, the tabs themselves, thanks to their elasticity, will tend to return to their initial position, and the peripheral edge of the end portion 12el of each one of the tabs will come into contact with the external surface of the male element 20. The situation, at this point, is as shown in Figure 9, in which the asterisks indicate the contact points between the peripheral edge (in this case, tapered) of each one of the end portions 12el of the elastic tabs and the external surface of the male component 20. It can thus be clearly understood that, at this point, any attempt to extract the male element 20 from the female element 15 (by simply translating the male element 20 in the direction contrary to the direction of insertion) will have no effect, if not the effect of increasing the mutual engagement of the elastic tabs and the male element, in particular thanks to the pulling action exerted by the male element 20 on the elastic tabs (see, in particular, the resolution of the forces generated by the mutual engagement of the elastic tabs and the male element 20, from which it is possible to infer that the pulling action exerted by the male element 20 on the tabs has the effect of increasing the opposing force between the male element and each one of the elastic tabs). The male element 20 and the female element 15 will thus be firmly constrained to each other.

The release of the male element 20 and the female element 15 through the extraction of the male element 20 from the female element 15 can thus be obtained by simply uncoupling the elastic tabs from the male element 20 in such a way that the tapered edges of the end portions 12el are no more in contact with the external surface of the male element 20; in this regard, the system according to the present embodiment includes the use of the release element 30 according to the following methods.

As already explained above, the release element 30 can be positioned as a plug on one of the opposite end portions (in the direction of longitudinal extension) of the female element 15. In particular, the release element 30 is suited to be rotated, with respect to the female element 15, around the longitudinal axis of the female element 15, perpendicular to the direction of insertion of the male element 20 and thus to the direction of extension of the housing seat 14 created in the female element 15. The rotation of the release element 30, in particular, can be obtained by acting on an engagement seat 30i with a tool suitable for this purpose, for example a socket wrench, a screwdriver or in any case a simple tool of this kind. An engagement projection 30e, eccentric with respect to the rotation axis of the release element 30, extends from the surface of the release element 30 that is opposite the external surface in which the engagement seat 30i is obtained (and therefore from the surface facing towards the inside of the female element 15).

The rotation of the locking element 30 thus results in a thrusting action exerted by the projection 30e on the elastic tabs which are thus switched elastically (bent or flexed) in the same direction in which they are switched during the insertion of the male element 20 according to the procedures summed up above; the thrusting action, in particular, is such as to generate the loss of contact between the peripheral edges (tapered) of the end portions 12el of the elastic tabs and the male element 20 which therefore can be extracted from the female element 15 through a translation movement in the direction contrary to the direction of insertion, thus obtaining the release of the male element 20 from the female element 15.

Having thus described the main characteristics of the system according to the embodiment of the present invention illustrated in the Figures from 5 to 9, it should be pointed out that also alternative solutions not explicitly illustrated in the figures fall within the scope of this embodiment; for example, the peripheral engagement edges of the end portions 12el of the elastic tabs may be not tapered but, for example, be parallel to the longitudinal axis of symmetry of the female element 15.

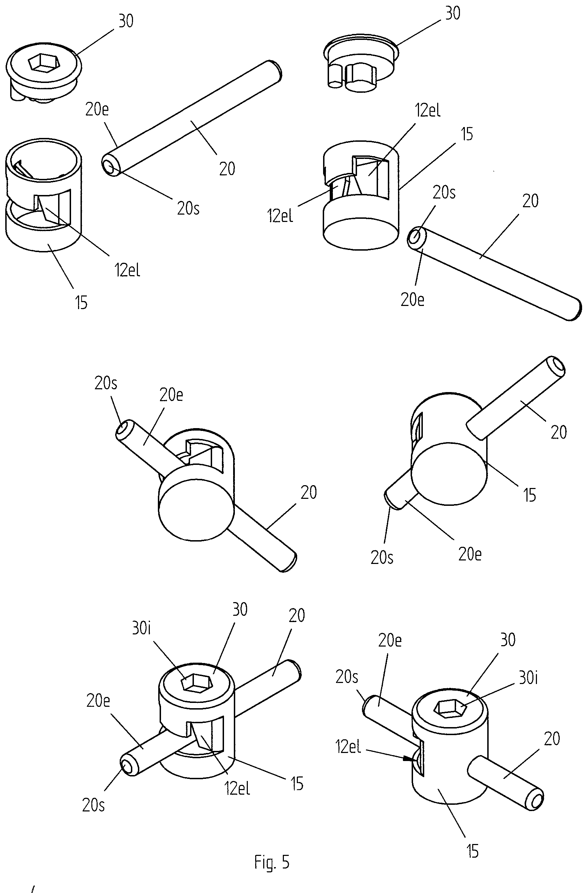

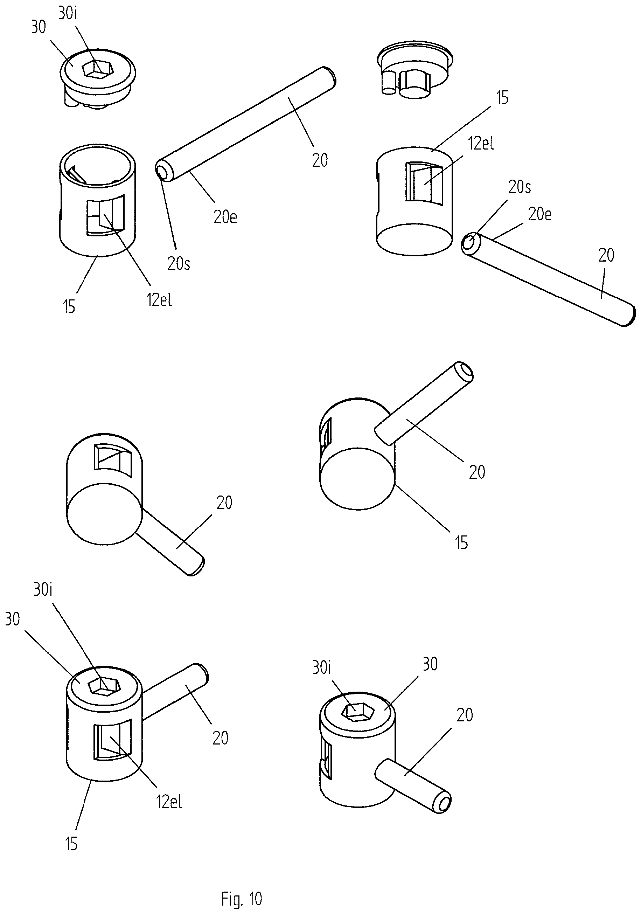

A further solution or embodiment that represents an alternative to that described above and illustrated in Figures from 5 to 9 is represented, for example, in Figure 10. In particular, this embodiment is differentiated from the one illustrated in Figures from 5 to 9 due to the fact that the end of the female element 15 opposite the end where the plug or release element 30 is engaged or applied is closed or blind instead of being open. Moreover, a further difference or specific characteristic of this embodiment lies in that the seat 14 created in the female element 15 and suited to house the male element 20 inserted therein communicates with the outside through a single opening instead of two opposite openings obtained in the main cylindrical body of the element 15. In this case, the male element 20 can be inserted in the female element 15 only to the point of bringing the thrusting surface 20s of the male element 20 in contact with the internal surface of the cylindrical body of the female element 15 (until the end portion 20e of the male element 20 exits from the opening of the female element 15 opposite the insertion opening, as shown, for example, in Figure 5).

A possible further embodiment of the system is described below with reference to Figures from 11 to 13.

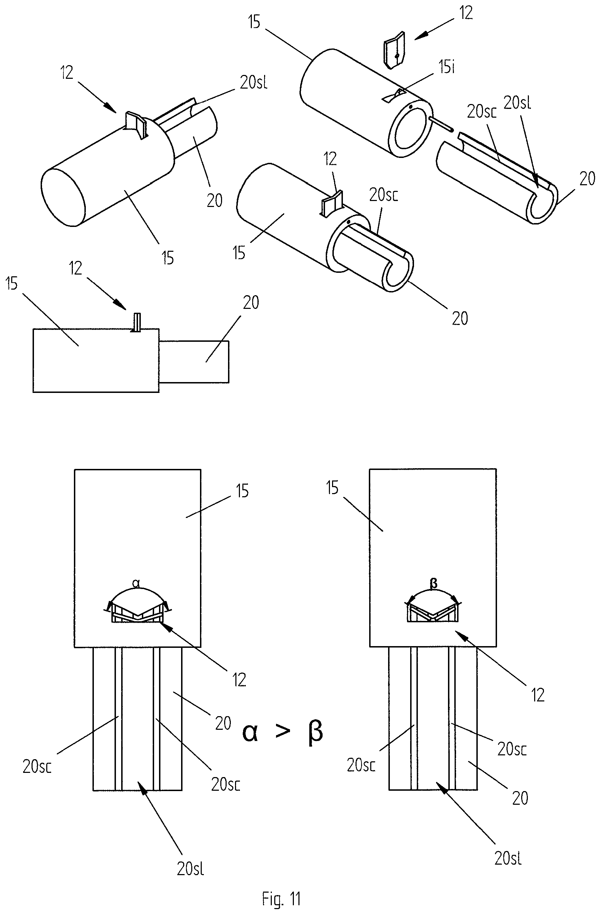

The embodiment described below is differentiated from the embodiments previously described due to the configuration of its component parts. In particular, in this case, the female component 15, even if it is still constituted by a hollow cylindrical body, defines in a natural way a housing and insertion seat 14 for the male element 20 which extends along a direction that is parallel to its longitudinal direction of extension. When in the rest position (and thus without thrusting stress), in which it defines an angle α different from 180° (Figure 11), the locking element 12, still formed by two oriented elastic tabs, can be inserted in the female element 15 through an insertion opening 15i and can be fixed in position through a needle-shaped fixing pin P suited to be inserted in a corresponding seat obtained in the external wall of the cylindrical body of the female element until becoming engaged with the locking element 12, in such a way as to at least partially obstruct the housing seat 14 created in the female element 15 (in such a way that at least the free ends 12el of the tabs are arranged along the insertion path of the male element 20). Finally, in relation to the male element 20, this too is essentially constituted by a hollow cylindrical body which however comprises a longitudinal slit 20sl delimited by two opposite tapered surfaces 20sc.

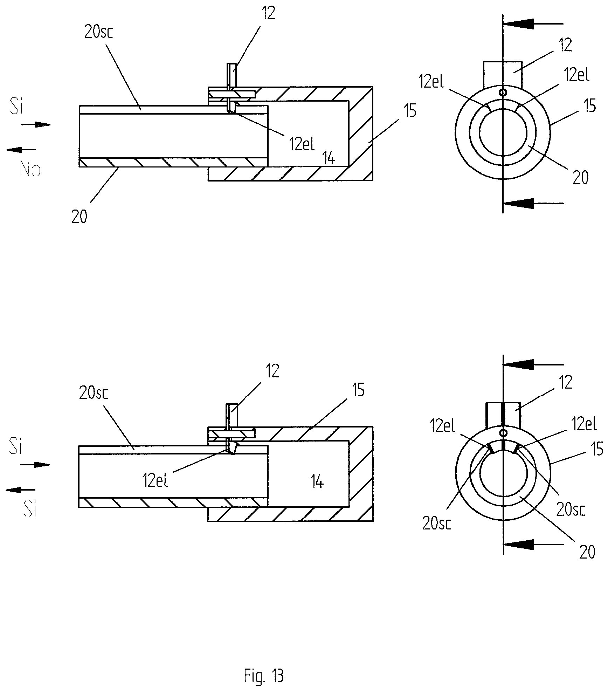

The operating principle of the system according to the present embodiment, in particular the procedures for mutually locking and releasing the male element 20 and the female element 15, is substantially similar to that of the embodiments described above, and therefore a detailed description of the same is omitted for the sake of brevity. On the other end, it should also be underlined that, in the case of this embodiment, through the insertion of the male element 20 in the housing and insertion seat 14 created in the female element 15, and following the elastic switching of the elastic tabs of the locking element 12, the tapered peripheral edges of the end portions 12el of the elastic tabs (in this case obtained on the opposite sides of the element 12 and not opposite each other) will respectively come into contact with the opposite surfaces 20sc of the male element 20, as shown in particular in Figure 13. With the surfaces 20sc respectively in contact with the opposite peripheral edges of the end portions 12el of the elastic tabs, the same elastic tabs will be oriented in such a way as to subtend an angle that is smaller than the angle α subtended in the released configuration of the male element 20 (intermediate between the angles α and β indicated in Figure 11). The extraction of the male element 20 from the female element 15 can thus be obtained only by acting from the outside on the locking element 12 (for example through simple pliers), in particular on the elastic tabs, until orienting them in such a way as to enclose an angle β (release angle) at the level of which the peripheral tapered edges of the end portions 12el of the elastic tabs are no more in contact with the respective opposite surfaces 20sc of the male element 20. Obviously, even in the case of this embodiment, alternative solutions not shown in detail in the figures fall within the scope of the present invention; for example, the end portion of the female element 15 opposite the insertion opening of the male element 20 can be blind, or closed, (as represented) or open, according to the needs and/or circumstances.

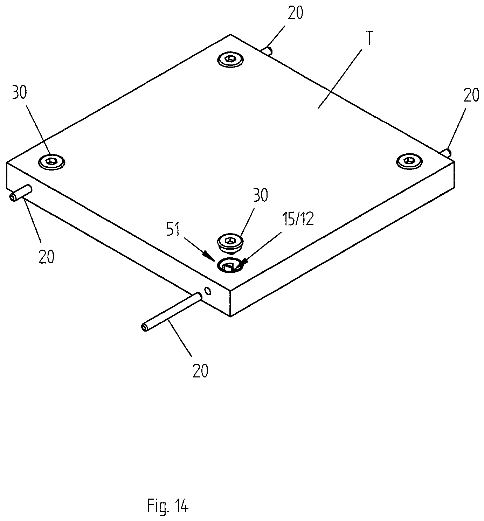

A first example of application and/or use of the system according to the embodiment of the present invention illustrated in Figures from 5 to 10 is schematically represented in Figure 14.

Housing seats have been obtained in the board T shown in Figure 14, for example a shelf of a shelving system, in the direction of the thickness of the board T and at the level of the angles, each one of said housing seats being provided for the female component 15 properly equipped with the locking element 12. Each one of the seats provided in the board T communicates with the outside through a corresponding opening that extends perpendicularly to the thickness of the board T and is such as to allow the insertion of the male element 20 through it and thus into the female component 15. It can thus be understood that in this way the board T can be fixed to a bearing structure, for example the frame of a shelving system or even a wall, through the interposition of male elements 20 and female elements 15 in a convenient number, wherein the male elements 20 can be fixed, at the level of the end portions opposite the board T, both through solutions known in the art (for example, dowels or similar solutions) and through the use of female elements or components (and the related locking elements) according to the present invention.

In this case, the release of the male and female elements can be obtained from the outside of the board T, acting on the respective release elements 30 that can also serve as closing elements for the openings made in the board, with evident aesthetic advantages.

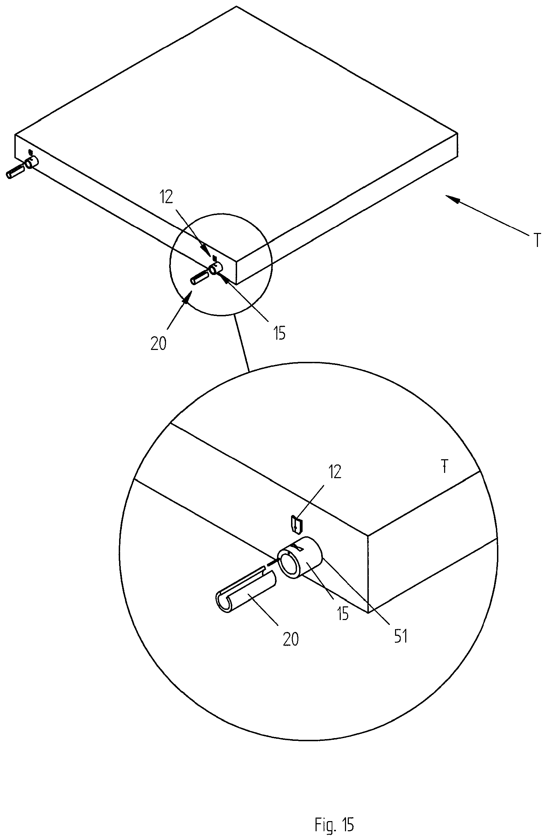

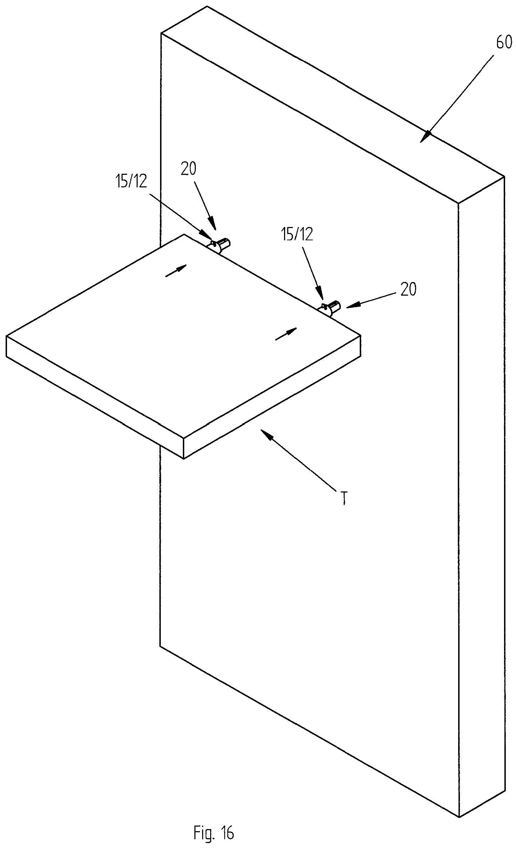

In the further example of application of the system according to the embodiment represented in Figures 15 and 16, a board or shelf T is fixed to a bearing structure 60 through the use of systems according to the embodiment of the present invention illustrated in Figures from 11 to 13; in this case, therefore, the female elements 15 (conveniently equipped with the locking elements 12) are inserted in corresponding housing seats located crosswise with respect to the thickness of the board T, while the respective male elements 20 become engaged in the wall or bearing structure 60, depending on the needs and/or circumstances, both according to procedures or solutions known in the art (dowels or similar elements) and through the interposition of female and locking elements carried out according to the present invention and housed in the wall or supporting structure 60.

In the further example of application shown in Figures from 18 to 20, a system according to a further embodiment is used to fix a handle 80 to a door/window 70, for example to the leaf of a door/window or even of a piece of home furniture.

The handle 80 comprises, in particular, a grip 80p suited to be held by a user, provided with two fixing portions 80f that extend from it and are suited to fix the handle 80 to the leaf or the door/window 70. The procedure for fixing the portions 80f is similar, therefore the fixing procedure of just one of them is described here below.

As shown in the figures, the fixing portion 80f houses or defines a female portion 15 of the type described above, which thus defines a housing and insertion seat 14 for a male element 20 which, too, is of the type described above. A locking element 12 extends inside the female element 15, partially obstructing the housing and insertion seat 14, wherein said locking element 12 is constituted by a tab that revolves around a rotation axis that is substantially perpendicular to the direction of insertion (from right to left and vice versa with respect to the figures) of the male element 20, and thus substantially perpendicular to the plane of the figures themselves. It should furthermore be underlined that, even if here below a locking element is described which can be rotated and switched through switching means M that are also described below, in the context of the present application it is however possible to use an elastic tab of the type previously described. In the rest position, and therefore in the absence of thrusting actions exerted by the male element 20, the free end 12el of the tab is positioned at the level of the seat 14 (arranged along the insertion path of the male element 20), in such a way that it is in contact with the end portion 20e of the male element 20 during its insertion in the housing and insertion seat 14.

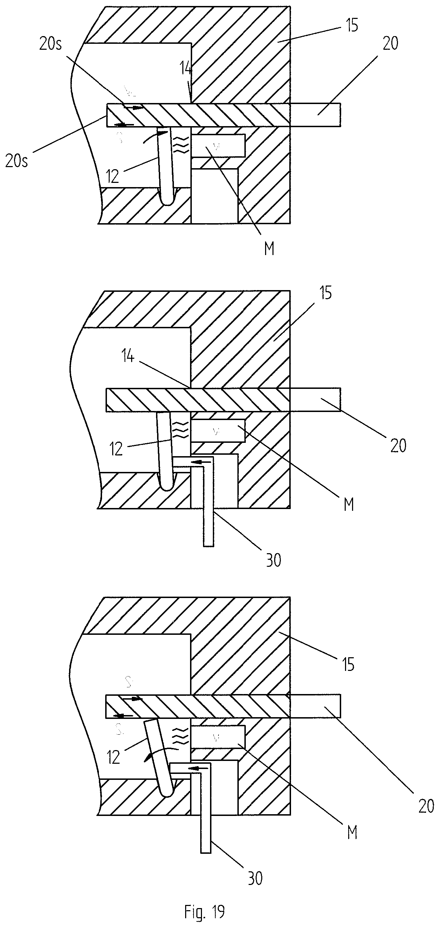

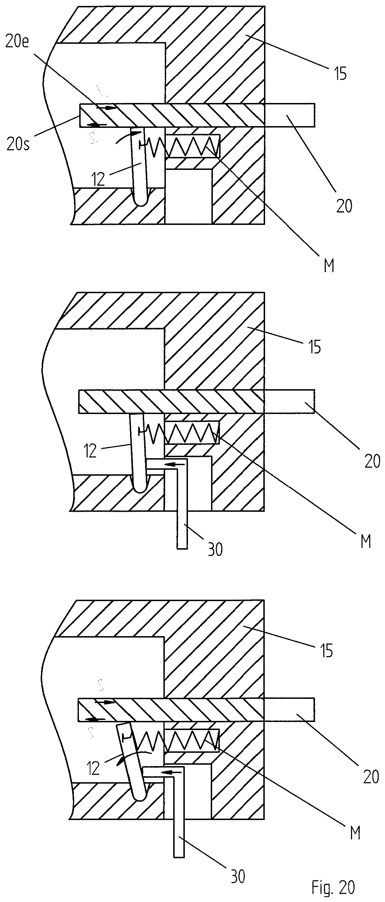

It can thus be understood that, according to procedures that are substantially similar to those described above and in particular as represented in Figures 19 and 20, the end 12el of the tab of the locking element 12 first comes into contact with the thrusting surface 20s of the male element 20 and then is pushed in such a way as to be rotated counter clockwise with respect to the figures, wherein, following the loss of contact between the thrusting surface 20s and the end 12el, the tab is returned according to a rotation in the opposite direction (and therefore counter clockwise) through switching or return means M, for example a spring or a magnet in the case of a metal tab; in this way, the peripheral edge of the free end 12el of the tab will come into contact with the external surface of the male element 20 according to the procedures already described above, thus causing the mutual locking of the male element 20 and the female element 15. According to the present embodiment of the system in order to release the male element 20 from the female element 15 a release element 30 is used, in particular L-shaped and suited to be inserted in an opening created in the female element 15 in such a way as to place the housing seat of the locking element 12 in communication with the outside. In this way, by means of the release element 30 it will be possible to exert a thrusting action on the tab of the locking element 12, in such a way as to set it rotating in the same direction in which the tab is rotated by the male element 20 during its insertion, and therefore in the direction contrary to the direction in which the tab is set rotating by the switching element M. In this way, therefore, the peripheral edge of the free end 12el of the tab is released from the external surface of the male element 20, which can thus be extracted and released from the female element 15.

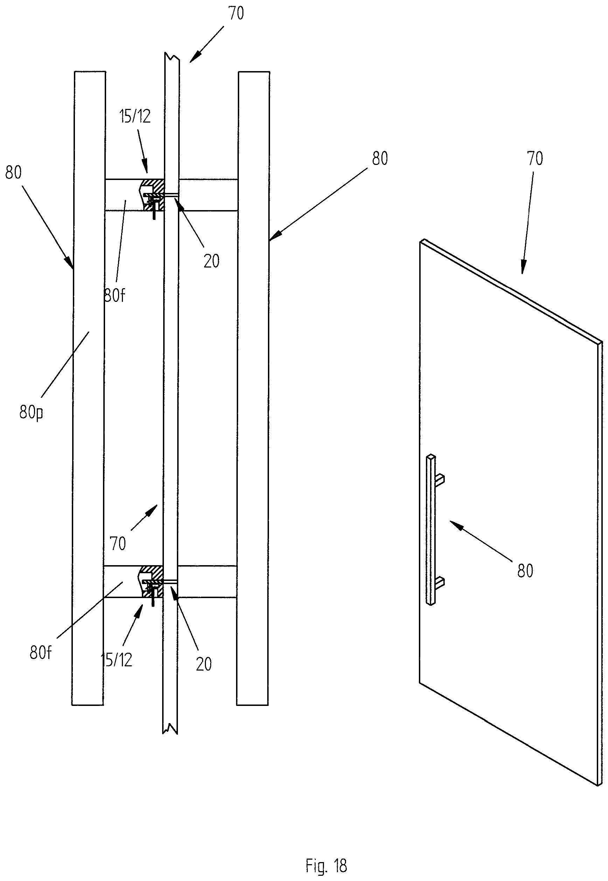

Also in this case, the end of the male element 20 opposite the end 20e that is engaged with the female element 15 can be fixed to the door/window leaf 70 both following methods used in the art (through a screw anchor or by previously screwing it) and through the interposition of a female element 15 conveniently equipped with the locking element 12 and housed in a proper seat created in the door leaf or door/window 70. Within the context of the present application, it will also be possible to fix two handles 80 (Figure 18), respectively on the opposite sides of the door leaf 70; for example, for this purpose, it will be possible to use male elements 20 whose overall length is such that their opposite ends 20e extend outside the door leaf 70 on the two opposite sides of the door leaf itself, each one of the opposite ends thus being able to become engaged with a female element 15 and the corresponding locking element 12 housed in the respective fixing portions 80f of the two handles.

In the further example of application illustrated in Figures from 1 to 4, a system according to a further embodiment of the present invention is used to fix the covers 90 (at least one) of a lock to a door/window 70, for example to the leaf of a door or window or even to the door of a piece of home furniture. Each one of the covers 90 comprises, in particular, holes 91 and 92 respectively suited to house a handle and to allow a key to be introduced, the two handles (not shown) being suited to be connected to each other through a bolt switching element 71 (commonly called "quadrello" in Italian) suited, in fact, to set the bolt translating when it is set rotating by a user acting on one of the two handles.

Since the procedures for fixing the two covers are similar, just one of said procedures is described here below.

Each one of the two covers 90 comprises a fixing portion 90f that houses or defines a female portion 15 (conveniently equipped with a locking element 12) of the type previously described, which thus defines a housing and insertion seat 14 for a male element 20 which is also of the type described above. The elastic tab of a locking element 12 extends inside the female element 15, partially obstructing the housing and insertion seat 14, said locking element 12 comprising in particular a main body developing as a semicircle, from which an elastic tab extends towards the inner space delimited by the semicircular body (and thus in a substantially radial direction), said elastic tab being suited to be switched (bent) along a direction that is substantially parallel to the direction of insertion (from left to right with respect to the figures) of the male element 20. In order to house the locking element 12, the female element 15 comprises a corresponding housing seat, wherein with the element 12 housed in the element 15 and in the absence of thrusting actions or actions exerted on the elastic tab, the free end 12el of the tab is positioned at the level of the seat 14, along the insertion path of the element 20, in such a way that it is engaged with the end portion 20e of the male element 20 during its insertion in the housing and insertion seat 14.

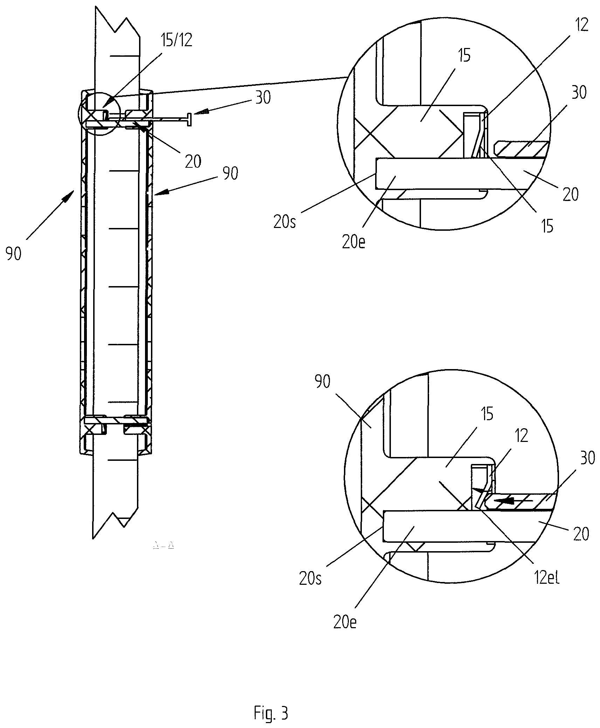

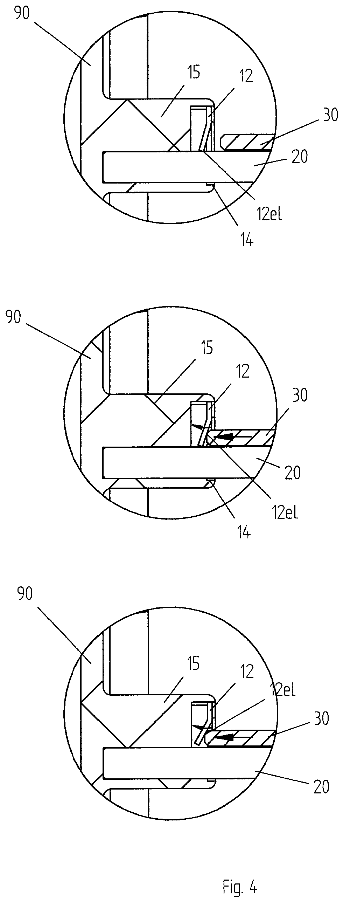

It can thus be understood that, according to procedures substantially similar to those previously described and in particular as shown in Figures 3 and 4, the free end 12el of the tab (opposite the semicircular main body) of the locking element 12 first of all comes into contact with the thrusting surface 20s of the male element 20, and then is pushed in such a way as to bend or flex it, in particular counter clockwise with respect to the figures, wherein following the loss of contact between the thrusting surface 20s and the end 12el, the tab is automatically returned according to a rotation in the opposite direction (and thus counter clockwise) thanks to its intrinsic elasticity; in this way, the peripheral edge of the free end 12el of the tab comes into contact with the external surface of the male element 20 according to the procedures already described above, thus resulting in the mutual locking of the male element 20 and the female element 15. According to the present embodiment of system that is the subject of the present invention, in order to release the male element 20 from the female element 15 a release element 30 is used, in particular a needle-shaped release element suited to be inserted in the seat 14 beside the male element 20. In this way, by means of the release element 30 it will be possible to exert a thrusting action on the tab of the locking element 12, in such a way as to set it rotating in the same direction in which the tab is set rotating by the male element 20 during its insertion, and thus in the direction contrary to the direction in which the tab starts rotating again thanks to its intrinsic elasticity. In this way, therefore, the peripheral edge of the free end 12el of the tab will be released from the external surface of the male element 20, which therefore can be extracted and released from the female element 15.

Obviously, also in this case, the end of the male element 20 opposite the end 20e which is engaged with the female element 15 can be used to fix a second cover 90 to the door/window leaf 70, on the opposite side of the door/window leaf itself with respect to the cover fixed according to the procedures described above, in particular both according to procedures for use known in the art and through the interposition of a female element 15 conveniently equipped with the locking element 12 and housed in the fixing portion 90f of the second cover or belonging to the same.

It has thus been shown, through the previous detailed description of the embodiments of the system according to the present invention represented in the figures, that the system according to the present invention makes it possible to obtain the desired results while at the same time minimizing the drawbacks of the systems carried out according to the known art.

For example, the system according to the present invention makes it possible to obtain, through simple and immediate procedures, the mutual and reliable locking of the male element and the female element together. Furthermore, the system according to the present invention requires the use of a substantially limited number of component parts, the component parts being furthermore rather easy and inexpensive to make.

It shoud furthermore be noted that, although the present invention has been explained by means of the previous detailed description of its embodiments represented in the drawings, the present invention is not limited to the embodiments described above and represented in the drawings. tilt For example, in each embodiment it is possible to use a locking element provided with a plate that is revolving and substantially rigid instead of being elastically bending, and vice versa. Furthermore, the system according to the present invention makes it possible to use the widest range of materials for making its component parts, such as metals, plastic materials, etc.

The scope and object of the present invention are then defined in the claims.

## Claims

1. Connection system, in particular for the assembly, through the mutual connection of component parts, of shelving systems, for example, and/or for the assembly of shelves and/or for similar applications,
said system comprising a first male element (20) and a second female element (15),
said male and female elements (20, 15) being suited to be alternatively connected to each other and disconnected from each other,
**wherein** for the mutual connection and disconnection of said male element (20) and female element (15) an end portion (20e) of said male element (20) is respectively introduced in and extracted from a first housing seat (14) defined in said female element (15),
said system comprising a locking element (12) suited to mutually lock said male and female elements (20, 15),
**wherein** said locking element (12) comprises at least one tab with a free end portion (12el) that can be switched through a rotating or bending movement and that, in the configuration in which said male element (20) and said female clement (15) are disconnected from each other, at least partially extends inside said first housing seat (14),
**wherein** said locking element (12) is configured in such a way that it can be switched to a locked position in which said free end portion (12el) is engaged with said male element (20) so that said male element (20) is inserted and becomes engaged with said first housing seat (14) created in said female element (15), and in such a way that any movement of said male element (20) or said female element (15) in the direction contrary to the direction of insertion of said end portion (20e) of said male element (20) in said first seat (14) created in said female element (15) results in the enhanced mutual engagement of said free end portion (12el) of said locking element (12) with said male element (20),
**wherein** said system furthermore comprises a release element (30) suited to switch said free end (12el) of said locking element (12) from said locked position to said released position, in which said free end of said locking element is not engaged with said male element (20),
**characterized in that**
said release element (30) is suited to be rotated with respect to a predefined rotation axis, and **in that** through the rotation of said release element (30) with respect to said predefined rotation axis, said free end portion (12el) is subjected to a thrusting action exerted by a portion of said release element that is eccentric with respect to said predefined rotation axis.

2. System according to claim 1, **characterized in that** said free end portion (12e1) of said locking element (12) comprises an external engagement edge, and **in that**, in said engaged position, said external engagement edge is in contact with a surface portion of said male element (20).

3. System according to claim 1 or 2, **characterized in that** said male element (20) comprises a thrusting surface (20s) that during the insertion of said male element (20) in said corresponding seat (14) created in said female element (15) thrusts said free end portion (12el) of said locking element (12), and **in that**, in said locked position, said free end (12el) of said locking element (12) is released from said thrusting surface (20s) of said male element (20).

4. System according to claim 2 or 3, **characterized in that** said locking element (12) can be switched from said locked position to a released position, in which said free end portion (12el) of said locking element (12) is not engaged with said male element (20), wherein said end portion (20e) of said male element (20) can thus be extracted from said seat (14) created in said female element (15).

5. System according to claim 4, **characterized in that** said locking element (12) can be released from said female element (15).

6. System according to claim 4 or 5, **characterized in that** said free end portion (12e1) of said locking element (12) can be switched from said locked position to said released position, in which said free end portion (12el) of said locking element (12) is not engaged with said male element (20), through said thrusting action exerted on it along a direction that is substantially parallel to the direction of insertion of said male element (20) in said housing seat (14) created in said female element (15).

7. System according to claim 1, **characterized in that** said release element (30) can be switched between a first position and a second position, and **in that**, with said release element (30) in said second position, said free end (12el) of said locking element (12) is subjected to said thrusting action exerted by a portion of said release element (30) and disconnected from said male element.

8. System according to claim 7, **characterized in that** said release element (30) can be translated inside said female element (15) along a direction that is substantially perpendicular to the direction of insertion of said male element (20) in said housing seat (14) created in said female element (15).

9. System according to claim 1, **characterized in that** said predefined rotation axis is substantially perpendicular to said direction of insertion of said male element (20) in said housing seat (14) created in said female element (15).

10. System according to claim 9, **characterized in that** said release element (30) comprises an engagement seat for a tool suited to set said release element (30) rotating.

11. System according to any of the claims from 1 to 10, **characterized in that** said free end (12el) of said locking element (12) comprises two half-portions arranged according to non-parallel directions according to a view perpendicular to said direction of insertion of said male element (20).

## Patentansprüche

1. Verbindungssystem, insbesondere für den Zusammenbau, durch wechselseitige Verbindung von Bauteilen, z.B. von Regalsystemen und/oder für den Zusammenbau von Regalen und/oder für ähnliche Anwendungen, wobei das besagte System ein erstes Einsteckelement (20) und ein zweites Aufnahmeelement (15) umfasst,
wobei die besagten Steck- und Aufnahmeelemente (20, 15) dazu geeignet sind, ersatzweise miteinander verbunden und voneinander getrennt zu werden,
wobei für die wechselseitige Verbindung und Trennung des Einsteckelements
(20) und des Aufnahmeelements (15) ein Endabschnitt (20e) des besagten Einsteckelements (20) in einen ersten Gehäusesitz (14), der im besagten Aufnahmeelement (15) vorgesehen ist, eingeführt bzw. aus diesem herausgezogen wird,
wobei das besagte System ein Verriegelungselement (12), das geeignet ist, die besagte Steck- und Aufnahmeelemente (20, 15) gegenseitig zu verriegeln, umfasst,
wobei das besagte Verriegelungselement (12) mindestens eine Lasche mit einem freien Endabschnitt (12el) aufweist, der durch eine Dreh- oder Biegebewegung geschaltet werden kann, und der sich in der Konfiguration, in der das besagte Einsteckelement (20) und das besagte Aufnahmeelement (15) voneinander getrennt sind, mindestens teilweise innerhalb des besagten ersten Gehäusesitzes (14) erstreckt,
wobei das besagte Verriegelungselement (12) so konfiguriert ist, dass es in eine Verriegelungsposition geschaltet werden kann, in welcher der besagte freie Endabschnitt (12e1) mit dem besagten Einsteckelement (20) in Eingriff steht, so dass das besagte Einsteckelement (20) im besagten ersten Gehäusesitz (14) eingeführt wird, der im besagten Aufnahmeelement (15) ausgebildet wird, und mit diesem in Eingriff kommt, und in der Weise, dass jede Bewegung des besagten Einsteckelements (20), oder des besagten Aufnahmeelements (15) in der Richtung entgegen der Richtung des Einführens des besagten Endabschnitts (20e) des besagten Einsteckelements (20) in den besagten ersten Sitz (14), der im besagten Aufnahmeelement (15) ausgebildet wird, zu einem verstärkten gegenseitigen Eingriff des besagten freien Endabschnitts (12el) des besagten Verriegelungselements (12) mit dem besagten Einsteckelement (20) führt,
wobei das besagte System ferner ein Freigabeelement (30) umfasst, das geeignet ist, das besagte freie Ende (12el) des besagten Verriegelungselements (12) von der besagten verriegelten Position in die besagte freigegebene Position zu schalten, in der das besagte freie Ende des besagten Verriegelungselements nicht in Eingriff steht mit dem besagten Einsteckelement (20),
**dadurch gekennzeichnet, dass**
das besagte Freigabeelement (30) dazu ausgelegt ist, in Bezug auf eine vordefinierte Drehachse gedreht zu werden, und dadurch, dass durch die Drehung des besagten Freigabeelements (30) in Bezug auf die besagte vordefinierte Drehachse der besagte freie Endabschnitt (12el) eine Schubwirkung erfährt, die von einem Abschnitt des besagten Freigabeelements ausgeübt wird, der in Bezug auf die besagte vordefinierte Drehachse exzentrisch ist.

2. System nach Anspruch 1, **dadurch gekennzeichnet, dass** der besagte freie Endabschnitt (12el) des besagten Verriegelungselementes (12) eine äußere Eingriffskante aufweist, und dass in der besagten Eingriffsposition die besagte äußere Eingriffskante in Kontakt mit einem Oberflächenabschnitt des besagten Einsteckelementes (20) steht.

3. System nach Anspruch 1 oder 2, **dadurch gekennzeichnet, dass** das besagte Einsteckelement (20) eine Schubfläche (20s) aufweist, die während des Einführens des besagten Einsteckelements (20) in den besagten entsprechenden Sitz (14), der im besagten Aufnahmeelement (15) ausgebildet ist, den besagten freien Endabschnitt (12el) des besagten Verriegelungselements (12) schiebt, sowie dadurch, dass in der besagten Verriegelungsposition das besagte freie Ende (12el) des besagten Verriegelungselements (12) von der besagten Schubfläche (20s) des besagten Einsteckelements (20) freigegeben ist.

4. System nach Anspruch 2 oder 3, **dadurch gekennzeichnet, dass** das besagte Verriegelungselement (12) von der besagten Verriegelungsposition in eine Freigabeposition umgeschaltet werden kann, in welcher der besagte freie Endabschnitt (12el) des besagten Verriegelungselements (12) nicht mit dem besagten Einsteckelement (20) in Eingriff steht, wobei der besagte Endabschnitt (20e) des besagten Einsteckelements (20) somit aus dem besagten im besagten Aufnahmeelement (15) ausgebildeten Sitz (14) herausgezogen werden kann.

5. System nach Anspruch 4, **dadurch gekennzeichnet, dass** das besagte Verriegelungselement (12) von dem besagten Aufnahmeelement (15) gelöst werden kann.

6. System nach Anspruch 4 oder 5, **dadurch gekennzeichnet, dass** der besagte freie Endabschnitt (12el) des besagten Verriegelungselements (12) aus der besagten Verriegelungsposition in die besagte Freigabestellung, in welcher der besagte freie Endabschnitt (12el) des Verriegelungselements (12) nicht mit dem besagten Einsteckelement (20) in Eingriff steht, durch die besagte auf ihn ausgeübte Schubwirkung entlang einer Richtung umgeschaltet werden kann, die im Wesentlichen parallel zur Einführungsrichtung des besagten Einsteckelements (20) in den besagten im besagten Aufnahmeelement (15) ausgebildeten Gehäusesitz (14) verläuft.

7. System nach Anspruch 1, **dadurch gekennzeichnet, dass** das besagte Freigabeelement (30) zwischen einer ersten Position und einer zweiten Position umgeschaltet werden kann, und dass, wenn sich das besagte Freigabeelement (30) in der besagten zweiten Position befindet, das besagte freie Ende (12el) des besagten Verriegelungselements (12) die besagte Schubwirkung erfährt, die von einem Teil des besagten Freigabeelements (30) ausgeübt wird, und von dem besagten Einsteckelement getrennt ist.

8. System nach Anspruch 7, **dadurch gekennzeichnet, dass** das besagte Freigabeelement (30) im Inneren des besagten Aufnahmeelements (15) entlang einer Richtung verschoben werden kann, die im Wesentlichen senkrecht zur Einführungsrichtung des besagten Einsteckelements (20) in den besagten im besagten Aufnahmeelement (15) ausgebildeten Gehäusesitz (14) verläuft.

9. System nach Anspruch 1, **dadurch gekennzeichnet, dass** die besagte vordefinierte Drehachse im Wesentlichen senkrecht zur besagten Einführungsrichtung des besagten Einsteckelements (20) in den besagten im besagten Aufnahmeelement (15) ausgebildeten Gehäusesitz (14) verläuft.

10. System nach Anspruch 9, **dadurch gekennzeichnet, dass** das besagte Freigabeelement (30) einen Eingriffssitz für ein Werkzeug aufweist, das geeignet ist, das besagte Freigabeelement (30) in Drehung zu versetzen.

11. System nach einem der Ansprüche von 1 bis 10, **dadurch gekennzeichnet, dass** das besagte freie Ende (12el) des besagten Verriegelungselements (12) zwei Halbabschnitte aufweist, die in nicht parallelen Richtungen gemäß einer Ansicht senkrecht zur besagten Einführungsrichtung des besagten Einsteckelements (20) angeordnet sind.

## Revendications

1. Système de raccordement, en particulier pour l'assemblage, au moyen de raccordement réciproque de parties composantes, par exemple, de systèmes d'étagères, et/ou pour l'assemblage de rayonnages et/ou d'applications similaires, ledit système comprenant un premier élément mâle (20) et un deuxième élément femelle (15),
lesdits éléments mâle et femelle (20, 15) étant aptes à être reliés alternativement entre eux et déconnectés l'un de l'autre,
**où** pour le raccordement réciproque et pour la déconnexion dudit élément mâle (20) et dudit élément femelle (15), une portion d'extrémité (20e) dudit élément mâle (20) est respectivement insérée dans et extraite d'un premier siège de logement (14) défini dans ledit élément femelle (15),
ledit système comprenant un élément de blocage (12) apte à bloquer réciproquement lesdits éléments mâle et femelle (20, 15),
**où** ledit élément de blocage (12) comprend au moins une ailette avec une portion d'extrémité libre (12el) et commutable par un mouvement de rotation ou de flexion qui, dans la configuration dans laquelle lesdits éléments mâle (20) et femelle (15) sont déconnectés l'un de l'autre, s'étend au moins partiellement à l'intérieur dudit premier siège de logement (14),
**où** ledit élément de blocage (12) est configuré de manière à être commutable en une position de blocage dans laquelle ladite portion d'extrémité libre (12el) est engagée avec ledit premier élément mâle (20) de manière à ce que ledit élément mâle (20) soit introduit et devient engagé dans ledit premier siège de logement (14) créé dans ledit élément femelle (15), et de manière à ce que, tout mouvement dudit élément mâle (20) ou dudit élément femelle (15) dans la direction contraire à la direction d'introduction de ladite portion d'extrémité (20e) dudit élément mâle (20) dans ledit premier siège (14) créé dans ledit élément femelle (15) donne comme résultat une augmentation de l'engagement réciproque de ladite portion d'extrémité libre (12el) dudit élément de blocage (12) avec ledit élément mâle (20),
**où** ledit système comprend en outre un élément de déclenchement (30) apte à commuter ladite extrémité libre (12el) dudit élément de blocage (12) de ladite position de blocage à ladite position de déclenchement, dans laquelle ladite extrémité libre dudit élément de blocage n'est pas engagée avec ledit élément mâle (20),
**caractérisé en ce que**
ledit élément de déclenchement (30) est apte à être tourné par rapport à un axe de rotation prédéfini, et **en ce que** grâce à la rotation dudit élément de déclenchement (30) par rapport audit axe de rotation prédéfini, ladite portion d'extrémité libre (12el)est soumise à une action de poussée exercée par une portion dudit élément de déclenchement qui est excentrique par rapport audit axe de rotation prédéfini.

2. Système selon la revendication 1, **caractérisé en ce que** ladite portion d'extrémité libre (12el) dudit élément de blocage (12) comprend un bord extérieur d'engagement, et **en ce que**, dans ladite position d'engagement, ledit bord extérieur d'engagement est en contact avec une portion de surface dudit élément mâle (20).

3. Système selon la revendication 1 ou 2, **caractérisé en ce que** ledit élément mâle (20) comprend une surface de poussée (20s) qui, durant l'introduction dudit élément mâle (20) dans ledit siège correspondant (14) créé dans ledit élément femelle (15), agit en poussée sur ladite portion d'extrémité libre (12el) dudit élément de blocage (12), et **en ce que**, dans ladite position de blocage, ladite extrémité libre (12el) dudit élément de blocage (12) est débloquée de ladite surface de poussée (20s) dudit élément mâle (20).

4. Système selon la revendication 2 ou 3, **caractérisé en ce que** ledit élément de blocage (12) peut être commuté de ladite position de blocage à une position de déblocage dans laquelle ladite portion d'extrémité libre (12el) dudit élément de blocage (12) n'est pas engagée avec ledit élément mâle (20), où ladite portion d'extrémité (20e) dudit élément mâle (20) en pouvant donc être extraite dudit siège (14) créé dans ledit élément femelle (15).

5. Système selon la revendication 4, **caractérisé en ce que** ledit élément de blocage (12) peut être désactivé dudit élément femelle (15).

6. Système selon la revendication 4 ou 5, **caractérisé en ce que** ladite portion d'extrémité libre (12el) dudit élément de blocage (12) peut être commutée de ladite position de blocage à ladite position de déblocage où ladite portion d'extrémité libre (12el) dudit élément de blocage (12) n'est pas engagée avec ledit élément mâle (20) grâce à ladite action de poussée exercée sur celle-ci le long d'une direction essentiellement parallèle à la direction d'introduction dudit élément mâle (20) dans ledit siège de logement (14) créé dans ledit élément femelle (15).

7. Système selon la revendication 1, **caractérisé en ce que** ledit élément de déblocage (30) peut être commuté entre une première position et une deuxième position, et **en ce que**, avec ledit élément de déblocage (30) dans ladite deuxième position, ladite extrémité libre (12el) dudit élément de blocage (12) est soumise à ladite action de poussée exercée par une portion dudit élément de déblocage (30) et déconnectée dudit élément mâle.

8. Système selon la revendication 7, **caractérisé en ce que** ledit élément de déblocage (30) peut être déplacé par translation à l'intérieur dudit élément femelle (15) le long d'une direction essentiellement perpendiculaire à la direction d'introduction dudit élément mâle (20) dans ledit siège de logement (14) créé dans ledit élément femelle (15).

9. Système selon la revendication 1, **caractérisé en ce que** ledit axe de rotation prédéfini est essentiellement perpendiculaire à ladite direction d'introduction dudit élément mâle (20) dans ledit siège de logement (14) créé dans ledit élément femelle (15).

10. Système selon la revendication 9, **caractérisé en ce que** ledit élément de déblocage (30) comprend un siège d'engagement pour un outil apte à la mise en rotation dudit élément de déblocage (30).

11. Système selon l'une quelconque des revendications de 1 à 10, **caractérisé en ce que** ladite extrémité libre (12el) dudit élément de blocage (12) comprend deux demi-portions disposées selon des directions non parallèles selon une vue perpendiculaire à ladite direction d'introduction dudit élément mâle (20).
